**Europäisches Patentamt**

**European Patent Office**

**Office européen des brevets**

(19)

(11) Publication number : **0 277 765 B1**

(12)

# EUROPEAN PATENT SPECIFICATION

(45) Date of publication of patent specification :
**18.03.92 Bulletin 92/12**

(51) Int. Cl.⁵ : **B01D 53/36, F01N 3/28,**
**F01N 3/20**

(21) Application number : **88300705.6**

(22) Date of filing : **27.01.88**

---

(54) **Method for the removal of nitrogen oxides from the exhaust gas of a diesel engine.**

---

(30) Priority : **27.01.87 JP 15290/87**

(43) Date of publication of application :
**10.08.88 Bulletin 88/32**

(45) Publication of the grant of the patent :
**18.03.92 Bulletin 92/12**

(84) Designated Contracting States :
**DE FR GB IT SE**

(56) References cited :
**DE-A- 2 249 411**
**FR-A- 2 254 367**
**US-A- 4 188 364**
**US-A- 4 403 473**

(73) Proprietor : **Nippon Shokubai Kagaku Kogyo Co., Ltd**
**1, 5-chome, Koraibashi Higashi-ku**
**Osaka-shi Osaka-fu 541 (JP)**

(72) Inventor : **Kobayashi, Motonobu**
**c-2, 931-11 Hamada Aboshi-ku**
**Himeji-shi Hyogo-ken (JP)**
Inventor : **Kinoshita, Futoru**
**931-11 Hamada Aboshi-ku**
**Himeji-shi Hyogo-ken (JP)**
Inventor : **Mitsui, Kiichiro**
**2-6-11, Ohji**
**Akashi-shi Hyogo-ken (JP)**
Inventor : **Inoue, Akira**
**59-1, Ikaganishimachi**
**Hirakata-shi Osaka-fu (JP)**

(74) Representative : **Rees, David Christopher et al**
**Kilburn & Strode 30 John Street**
**London WC1N 2DD (GB)**

## Description

This invention relates to a method for the removal of nitrogen oxides from the exhaust gas of a diesel engine. More particularly, it relates to a method for the removal by catalytic reduction in the presence of ammonia of nitrogen oxides (hereinafter referred to as "$NO_x$") which are contained in the exhaust gas from such diesel engine automobiles as trucks and buses, the exhaust gas from diesel engine generators, and the exhaust gas from stationary diesel engines, for example. Especially, this invention relates to a method for the removal of $NO_x$ by contacting the exhaust gas with honeycomb catalyst in the presence of ammonia, so as to enable the removal of $NO_x$ to be effected efficiently in real-time conformity with variations in the behaviour of the exhaust gas while, at the same time, repressing the inclusion of ammonia in the exhaust gas departing from the site of $NO_x$ removal.

In the past, a so called three-way catalyst, capable of simultaneously removing $NO_x$, CO (carbon monoxide) and HC (hydrocarbons) from the exhaust gas, has been widely used as a purifying catalyst for the exhaust gas emanating from an internal combustion engine, particularly an automobile engine.

The three-way catalyst functions most effectively while the gasoline engine is being operated under a reducing atmosphere with the air-to-fuel (A/F) ratio kept in the proximity of the chemical equivalent point. While the automobile is in motion therefore, the engine is generally controlled by an electronically controlled injection device, for example, to maintain the A/F ratio at a constant level. Studies have been continued to date with a view to developing a catalyst which effects efficient removal of $NO_x$, CO, and HC under the conditions permitting maintenance of this constant A/F ratio. So far, numerous catalysts using such precious metals as platinum, palladium, and rhodium have been proposed.

In the case of a diesel engine however, the exhaust gas has a very high oxygen concentration in the range of 4 to 20% and therefore exists in the oxidising atmosphere of an oxygen-rich gas composition. When a three-way catalyst is used for the removal of $NO_x$ from this exhaust gas, the removal of $NO_x$ may be attained only with great difficulty because the CO and HC components in the exhaust gas intended to serve as reducing agents are lost through oxidisation.

Since diesel automobiles enjoy a high fuel efficiency, their numbers are tending to increase. However, since the removal of $NO_x$ from the exhaust gas of diesel automobiles is very difficult for the reasons given above, the question of $NO_x$ emission from diesel motor cars becomes a serious social issue.

Among various known means for the removal of $NO_x$ under an oxidising atmosphere, the selectively reductive removal of nitrogen oxides using ammonia ($NH_3$) as a reducing agent has been accepted as being a method which even under an oxidising atmosphere can induce the selective reaction of $NO_x$ with ammonia, without being affected by the oxygen concentration in the exhaust gas. Thus, it has been widely applied to the purification of the exhaust gas from such stationary sources as boilers and furnaces in a thermal power plant, for example.

As a measure for controlling the flow volume of ammonia in the selectively reductive removal of nitrogen oxides using ammonia, a method has been employed which comprises determining the total $NO_x$ content of the exhaust gas by multiplying the signal of the exhaust gas flow volume issuing from an exhaust gas flow volume detector by the $NO_x$ concentration signal issuing from an $NO_x$ concentration measuring device adapted to measure the $NO_x$ concentration in the exhaust gas. The ammonia gas flow volume is then determined by multiplying the total $NO_x$ content mentioned above by the prescribed $NH_3/NO_x$ ratio, and the resultant output signal is fed to an ammonia flow meter to control the flow of ammonia gas in conformity with the variation in the $NO_x$ content of the exhaust gas due to the variation in the load such as of a boiler. Alternatively, a method has been employed which comprises detecting the concentration of leaking ammonia at the outlet of a reactor and synchronously actuating an ammonia flow meter so as to lower the concentration of leaking ammonia below a fixed level thereby controlling the amount of ammonia gas being introduced to the site of reaction.

When the ammonia selective reduction method (SCR method) is employed for the treatment of the exhaust gas from such a mobile source as a diesel automobile, problems arise, since an automobile is rarely driven at fixed regime but is generally operated by randomly repeating such actions as idling, acceleration, slowing, and deceleration. The temperature, amount and composition of the exhaust gas therefore proportionately change by the minute and indeed, the $NO_x$ content in the exhaust gas is known to vary remarkably.

Where the $NO_x$ content of exhaust gas varies remarkably, as in the case of exhaust gas from a diesel automobile for example, it is highly preferable that ammonia should be supplied in strict conformity with the $NO_x$ content. By the conventional method of ammonia control employed for the removal of $NO_x$ of the exhaust gas from a stationary source, however, accurate control of the flow volume of ammonia is not easily achieved because devices for the determination of $NO_x$ concentration exhibit a relatively slow response speed. A considerable time lag therefore inevitably arises between the time the $NO_x$ concentration at the inlet of the de-$NO_x$ unit and the ammonia concentration at the outlet of the de-$NO_x$ unit are detected on the one hand, and the time the feed amount of ammonia is adjusted and the feed of ammonia in the adjusted amount is started on the other hand. As a result, is it extremely difficult to obtain effective removal of the $NO_x$ from the exhaust gas and, at the same time, repress to the fullest possible extent the amount of ammonia allowed to leak in the exhaust gas leaving the site of $NO_x$ removal.

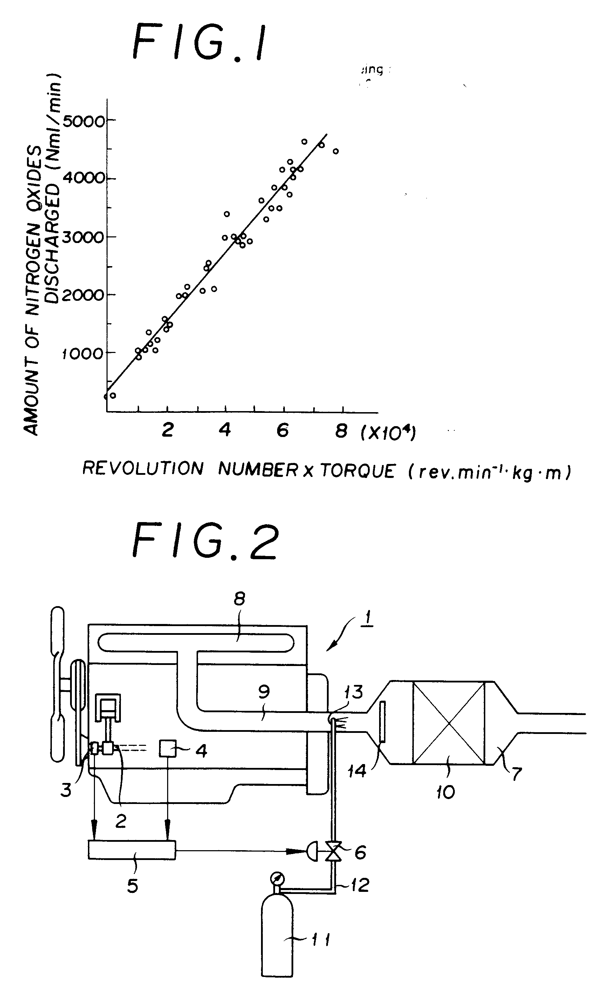

As a means for lowering the $NO_x$ content of the exhaust gas from an internal-combustion engine, a method which effects the reduction of the $NO_x$ content by adding ammonia to the exhaust gas proportionately to the amount of the fuel consumed and passing the resultant mixed gas through a reactor packed with a pelletised catalyst where it is subjected to reducing combustion is known in the art (US-A-4,403,473). In such a case, it may be safely concluded that the $NO_x$ content in the exhaust gas and the amount of fuel consumed are substantially proportional to each other when the engine revolutions are constant as illustrated in Figure 1 of the specification of the U.S. Patent. However, when the engine revolutions and the torque of the engine simultaneously vary as they do when the automobile is in motion, the $NO_x$ content and the amount of fuel consumed are not in direct proportion to each other , and it is difficult for this method to supply ammonia in strict conformity with the momentarily varying $NO_x$ content. Thus, this method cannot adapt itself to the removal of the $NO_x$ in the exhaust gas from a mobile source.

Thus, a method suitable for the efficient removal of $NO_x$ from the exhaust gas of a diesel automobile in the presence of ammonia has not yet been developed for the reasons given above.

An object of this invention, therefore is to provide a method for the efficient removal of nitrogen oxides from the exhaust gas of a diesel engine.

Another object of this invention is to provide a method for the efficient removal by catalytic reduction of the $NO_x$ from the exhaust gas of a diesel engine in the presence of ammonia.

A further object of this invention is to provide a method for the removal of the $NO_x$ from the exhaust gas of a diesel engine automobile in motion by the contact of the exhaust gas with a catalyst in the presence of ammonia, which method permits the removal of the $NO_x$ to be effected efficiently over a long period of time in spite of any possible sharp variation in the behaviour of the exhaust gas and, at the same time, represses to the fullest possible extent the leakage of ammonia in the exhaust gas departing from the site of $NO_x$ removal.

According to one aspect of the invention, there is provided a method for the removal of nitrogen oxides from the exhaust gas of a diesel engine by catalytic reduction using a honeycomb catalyst in the presence of ammonia, characterised by feeding the ammonia into the exhaust gas into an amount which is proportional to the product of the engine revolutions and the torque of the diesel engine.

According to another aspect of the invention, there is provided a system for the removal of nitrogen oxides from the exhaust gas of diesel engine by catalytic reduction using ammonia, which includes an ammonia flow control valve connected to an ammonia source and an ammonia feed pipe connecting the ammonia flow control valve to a converter packed with a honeycomb catalyst and fitted with a nozzle opening into the engine exhaust pipe characterised by an arithmetic unit, an engine revolution sensor adapted to detect the engine revolution level and connected to the arithmetic unit, a torque sensor adapted to detect the torque generated by the diesel engine and connected to the arithmetic unit, the flow control valve being adapted to effect control of the flow of ammonia in response to a signal generated by the arithmetic unit.

The invention may be carried into practice in various ways and one embodiment will now be described by way of example with reference to the accompanying drawings, in which:-

Figure 1 is a graph showing the relationship between the product of the engine revolutions of a diesel engine multiplied by its torque, and the amount of nitrogen oxides discharged in the exhaust gas;

Figure 2 is a schematic diagram illustrating a diesel engine provided with an exhaust gas purifying device in accordance with the invention; and

Figure 3 is a flow chart illustrating the operation of an arithmetic unit for use in the present invention;

It has been found by the Applicants, that the amount of nitrogen oxides produced in a diesel engine is in direct proportion to the horsepower of the diesel engine, namely the engine revolutions multiplied by its torque. When a diesel engine having a displacement of 6,600 cc and provided with a dynamo was operated at varying revolution numbers, i.e. 550 rpm, (idling), 1,000 rpm,, 1,200 rpm, 1,500 rpm, 1,800 rpm, 2,000 rpm, 2,500 rpm, and 3,000 rpm, with the torque varied for each of the revolution values to determine the relation between the horsepower (i.e., the revolution value multiplied by the torque) and the amount of nitrogen oxides discharged in the exhaust gas, the results were as shown in Figure 1.

It can clearly be seen from Figure 1 that the horsepower is in direct proportion to the amount of nitrogen oxides discharged over a wide range of engine speed. Thus, since the amount of ammonia to be supplied can be determined directly from the revolution number and torque of the engine, the supply of ammonia can be effected in strict conformity with the amount of $NO_x$ to be discharged without any significant delay even when the amount of exhaust gas and its $NO_x$ content vary sharply, and, as a result, the removal of the $NO_x$ from the exhaust gas can be carried out efficiently.

The present invention will now be described in detail with reference to the schematic diagram of Figure 2. First, in a diesel engine 1, the signal from an engine revolution number sensor 3 measuring the revolutions of the crank shaft (drive shaft) 2 connected to a piston and the signal from a torque sensor 4 measuring the torque generated by the engine 1 are fed into an arithmetic unit 5. The arithmetic unit 5 incorporates a function which multiplies the revolution number of engine by the torque and a function to calculate the total amount of nitrogen oxides discharged from the engine. It further carries out the multiplication of the outcome of the above calculation by the prescribed ammonia/$NO_x$ ratio. Then, the output of the arithmetic unit 5 is fed into an ammonia flow volume controller 6 so as to effect control of the amount of ammonia to be mixed with the exhaust gas being supplied to a converter 7. The exhaust gas is forwarded via a manifold 8, through an exhaust pipe 9 communicating with the manifold 8 and supplied to a reactor 7 packed with a honeycomb catalyst 10. Ammonia from an ammonia supply 11 is forwarded via a pipe 12, regulated to the required volumetric flow by an ammonia flow volume controller 6, and supplied by an ammonia injection nozzle 13 into the exhaust gas within the exhaust pipe 9. The mixture, when necessary, is mixed and dispersed by a gas dispersing plate 14 and then passed through the bed of honeycomb catalyst 10 for decomposition of the $NO_x$ component of the exhaust gas by reduction.

The engine revolution counter or tachometer is not specifically restricted in terms of mode of operation. It may be mechanical, electrical or magnetic. The torque sensor usable for the measurement of the torque generated by the engine is also not specifically restricted in terms of its mode of operation.

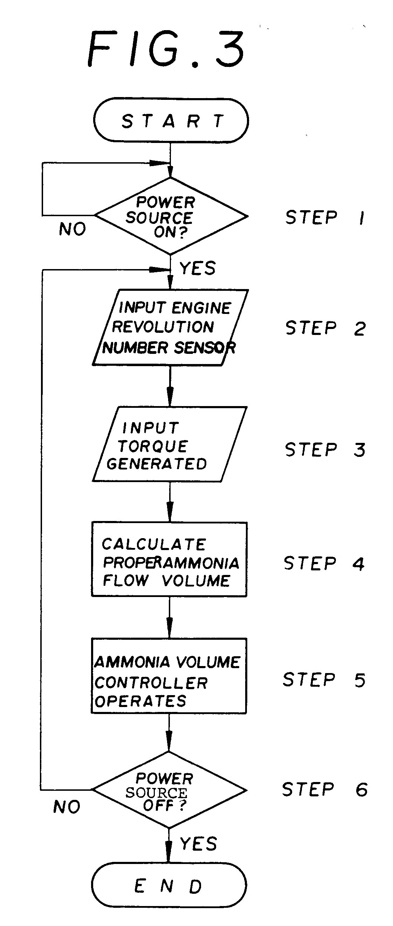

The arithmetic unit is of a type incorporating a microcomputer, though an integrated circuit (IC) specifically designed to serve as an arithmetic unit may be used. The operation of the arithmetic unit used herein will be described with reference to Figure 3.

First, the arithmetic unit 3 decides as to whether or not the power source is turned on by discerning the application of a voltage upon itself (Step 1). Then, the arithmetic unit 5, on condition that the power source is turned on, admits an electrical signal from the engine revolution sensor 3 representing the engine revolution value and, at the same time, admits an electrical signal from the torque sensor 4 representing the torque generated by the engine (Steps 2 and 3). The arithmetic unit 5 then calculates the horsepower from the electrical signals from Steps 2 and 3. It then proceeds to calculate the total amount of nitrogen oxides to be discharged from the engine based on the horsepower. By multiplying this horsepower by the $NH_3/NO_x$ ratio proportional to the total amount of nitrogen oxides calculated as described above, the arithmetic unit finds the proper flow volume of ammonia to be supplied from the ammonia supply 11 to the catalyst bed (Step 4).

Subsequently, the arithmetic unit 5 feeds the outcome of the calculation mentioned above to the ammonia flow volume controller 6. The ammonia flow volume controller 6 is consequently caused to control the amount of ammonia to be injected into the catalyst bed 10 through the ammonia injection nozzle 13 (Step 5). Finally, the arithmetic unit 5 makes a decision as to whether or not its power source is turned off. When the power source is not turned off the arithmetic unit 5 repeats the processes from Step 2 to Step 6 once again. When the power source is tuned off, the processes mentioned above are terminated (Step 6). Where the catalyst is to be used with a diesel automobile such as a truck or bus or a tractor it is required to be accommodated in as compact a reaction container as permissible owing to great restrictions liable to be imposed on the allocation of space. A honeycomb catalyst therefore proves to be desirable because the amount of catalyst required from the treatment decreases in proportion as the geometric surface area thereof increases.

In a honeycomb catalyst, as the geometric surface area of the honeycomb catalyst increase the equivalent diameter of the through holes bored through it must decrease as a natural consequence. The through holes in the catalyst, therefore are liable to become clogged with the dust entrained in the exhaust gas, and with the elapse of time, there ensues a heavy increase in the pressure loss of the catalyst bed.

A continued study on the shape of the honeycomb catalyst for use on a diesel automobile has resulted in a conclusion that the equivalent diameter of the through holes bored in the honeycomb catalyst preferably fall in the range of 1.5 to 5mm, more preferably 2.0 to 4.0mm.

If the equivalent diameter of the through holes is less than 0.5mm, there is a disadvantageous tendency for the pressure loss to increase unduly and the through holes are liable to be clogged with the dust contained in the exhaust gas. If the equivalent diameter exceeds 5mm, the catalyst entails a disadvantage that its geometric surface area decreases and the ratio of denitrification is lowered proportionately.

The geometric surface area of the catalyst is preferably in the range of 600 to 2,000 $m^2/m^3$. If it is less than 600 $m^2/m^3$, the ratio of removal of $NO_x$ tends to be insufficient. If it exceeds 2,000 $m^2/m^3$, the pressure loss tends to be unduly heavy. The temperature of the exhaust gas of a diesel automobile notably varies with the operating conditions of the automobile. When the operation is switched from idling to conditions of high load and high engine revolution values, for example, the temperature of the exhaust gas at the outlet of the manifold rises sharply from about 150°C to about 700°C over a period of about 1 minute. Under these circumstances, the $NH_3$ absorbed on the catalyst is eluted and released into the exhaust gas in consequence of the sharp rise

EP 0 277 765 B1

of temperature of the exhaust gas and threatens to cause secondary air pollution.

When the $NO_x$ in the exhaust gas of the diesel automobile is removed in the presence of ammonia, the measure that is to be taken in reducing the amount of ammonia to be eluted from the catalyst during the sharp rise of the temperature of the exhaust gas becomes a very important consideration.

The present Applicants have studied this problem and have found that the amount of ammonia eluted from the catalyst by the sharp rise of the temperature of the exhaust gas decreases proportionately as the wall thickness of the cells of the honeycomb catalyst decreases. If the cell wall thickness decreases excessively, to less than 0.3mm, for example, the catalyst tends to be so deficient in mechanical strength that it will be unable to withstand the shocks liable to be exerted on the automobile body by its motion. If the cell wall thickness exceeds 0.9mm, the amount of the ammonia to be eluted during the sharp rise of the temperature of the exhaust gas tends to increase to an intolerable level. Thus, the honeycomb catalyst tends to produce desirable results when the cell wall thickness is in the range of 0.3 to 0.9mm.

The honeycomb catalyst may exhibit insufficient impact resistance when its total pure volume is less than 0.25 $cm^3$/g and the ratio of the volume occupied by pores measuring not more than 0.05 micron in diameter to the total pore volume is less than 40%.

A honeycomb catalyst which possesses a microporous structure falling within the various ranges mentioned above, therefore, can sufficiently withstand the harsh thermal shocks inherent in a diesel automobile and produces desirable results.

The present invention has no particular preference in terms of the active component of the catalyst. It has been ascertained that the catalyst produces desirable results when the active material is composed of 60 to 99.5% by weight of an oxide containing titanium and/or zirconium, (Component A), and 0.5 to 40% by weight of an oxide of at least one element selected from the group consisting of vanadium, tungsten, molybdenum, manganese, cerium, and tin (Component B).

Thus, the catalyst gives desirable results when it uses an oxide containing titanium and/or zirconium as Component A. Suitable examples of Components A include:- titanium oxide, zirconium oxide, a binary complex oxide of titanium and silicon (hereinafter referred to as "$TiO_2$-$SiO_2$"), a binary complex oxide of titanium and zirconium, and a ternary complex oxide of titanium, silicon, and zirconium. The component A exhibits desirable properties when its specific surface area is not less than 10 $m^2$/g, preferably 20 $m^2$/g.

The catalyst of the present invention can be prepared for example, by the following method, though the preparation of this catalyst need not be limited to this particular method.

An aqueous solution containing such active components as vanadium and tungsten are blended in conjunction with a moulding aid and are moulded in the form of honeycombs using an extrusion moulding machine. The intended catalyst is produced by drying the honeycombs at a temperature in the range of 50° to 120°C and then calcining them in a current of air at a temperature in the range of 450°C to 700°C, preferably 500°C to 650°C, for a period in the range of 1 to 10 hours, preferably 2 to 6 hours. Alternatively, a method which comprises premoulding a powder of $TiO_2$ or $TiO_2$-$SiO_2$, for example, in the form of honeycombs and impregnating the honeycombs with an aqueous solution containing such active components as vanadium and tungsten may be employed for the preparation of the catalyst.

The exhaust gas of the diesel engine with which the present invention is concerned generally has a composition containing 10 to 1,000 ppm of $SO_x$, 2 to 21% by volume of oxygen, 5 to 15% by volume of carbon dioxide, 5 to 15% by volume of water, 0.05 to 0.6g/$m^3$ of soot, and about 200 to 3,000 ppm of $NO_x$. While this invention is concerned with an exhaust gas emitted from a diesel engine, it is not unduly affected by its chemical composition.

As regards the conditions of treatment, the reaction temperature is preferably in the range of 150° to 650°C, preferably 200° to 600°C.

The space velocity of the exhaust gas during the treatment is preferably in the range of 2,000 to 100,000 $hr^{-1}$, preferably 5,000 to 50,000 $hr^{-1}$.

The amount of ammonia to be added to the exhaust gas is preferably in the range of 0.3 to 2 parts by volume per part by volume of $NO_x$. Because of the necessity for repressing the leakage of unaltered ammonia in the exhaust gas departing from the site of $NO_x$ removal to the fullest possible extent, it is particularly desirable to use ammonia in such an amount that the molar ratio of ammonia to $NO_x$ will be not more than 1.

The present invention will now be described more specifically with reference to a working Example and a Control. It should be noted, however, that this invention is not limited to this Example.

EXAMPLE

$TiO_2$-$SiO_2$ was prepared by the following procedure. As titanium source, an aqueous sulphuric acid solution of titanyl sulphate of the following composition was used.

5

$TiOSO_4$ (as $TiO_2$)    250 g/litre
Total $H_2SO_4$        1,100 g/litre

Separately, 715 litres of aqueous ammonia ($NH_3$,25%) was added to 1,000 litres of water and 60 kg of silica sol having an $SiO_2$ content of about 30%by weight (produced by Nissan Chemicals industries, Ltd. and marketed under the trade mark designation "SNOWTEX NCS-30") was added to the resultant mixed solution. To the solution consequently obtained, a dilute aqueous titanium-containing sulphuric acid solution, obtained by adding 750 litres of water to 382 litres of the aqueous sulphuric acid solution of titanyl sulphate was gradually added dropwise to give rise to a coprecipitated gel. Then, the solution containing the gel was left standing at least for 15 hours. The $TiO_2$-$SiO_2$ gel thus produced in the solution was separated by filtration, washed with cold water, and then dried at 200°C for 10 hours.

The dry gel was then calcined in an atmosphere of air at 550°C to 6 hours, crushed with a hammer mill, and classified with a classifier, to collect a powder having an average particle diameter of 20 microns.

The powder thus produced had a composition of Ti : Si = 4 : 1 (atomic ratio) and a BET surface area of 180 $m^2$/g.

In a mixture consisting of 3 litres of monoethanolamine and 35 litres of water, 7.55 kg of ammonium paratungstate was dissolved and then 2.47 kg of ammonium metavanadate was dissolved, to produce a homogeneous solution. In a kneader, this solution and 80kg of the powder were added, together with a moulding aid, and were vigorously stirred with the continued addition of a suitable amount of water. The resultant mixture was moulded using an extrusion moulding machine in the form of a lattice 150mm square in visible sectional area and 650mm in length. The lattice was dried at 60°C and calcined in a current of air at 470°C for 5 hours. The finished catalyst thus obtained had a $V_2O_5$ content of 2% by weight and a $WO_3$ content of 7% by weight.

The honeycomb catalyst thus obtained was found to possess an equivalent through hole diameter of 3.2mm, a cell wall thickness of 0.5 mm, a geometric surface area of 910 $m^2$/$m^3$, and a total pore volume of 0.42 $cm^3$/g. The volume occupied by pores measure not more than 0.05 micron was 63% of the total pore volume.

Two honeycomb catalysts of the foregoing description were disposed in parallel in a converter, placed so as to communicate with the exhaust pipe of an automobile diesel engine having a displacement of 6,600 cc. A diesel engine 1 provided with an engine revolution sensor 3, torque sensor 4, an arithmetic unit 5, and an ammonia flow volume controller (solenoid valve) 6 as illustrated in Figure 2 was operated in Mode 6, the standard conditions specified for use in testing a diesel automobile for $NO_x$ tolerance, with the ammonia from an ammonia container 11 injected into the exhaust gas within a exhaust tube at a flow rate controlled by the arithmetic unit 5 to keep the ammonia/$NO_x$ molar ratio at a constant level of 0.8. During this operation, the ratio of $NO_x$ removal and the amount of ammonia leaking in the departing exhaust gas were determined as hourly averages. The results were as shown in Table 1.

CONTROL

The procedure of the example described above was repeated, excepting that the $NO_x$ concentration in the exhaust gas was determined with an automatic nitrogen oxide measuring unit attached to the exhaust pipe 9 in place of the torque sensor. In this setup, the amount of the exhaust gas was determined by causing the engine revolution sensor to feed an output signal corresponding to the engine revolution into the arithmetic unit. In the meantime, an $NO_x$ measuring unit detected the $NO_x$ concentration in the exhaust gas and fed a corresponding output signal to the arithmetic unit. This arithmetic unit calculated the total amount of $NO_x$ in the exhaust gas, based on the amount of the exhaust gas and the $NO_x$ concentration. The amount of ammonia to be fed was calculated by multiplying the total amount of $NO_x$ by the prescribed ammonia/$NO_x$ ratio. The corresponding signal of the product was fed to the ammonia flow volume controller. Then, the ammonia was injected via the ammonia injection nozzle into the exhaust pipe. The resultant mixture of ammonia and the exhaust gas was led to the honeycomb catalyst bed inside the converter. The results were as shown in Table 1.

EP 0 277 765 B1

## TABLE 1

|  | Example | Control |
|---|---|---|
| Average inlet $NO_x$ concentration (ppm) | 480 | 480 |
| Ammonia/$NO_x$ (molar ratio) | 0.8 | 0.8 |
| Average outlet $NO_x$ concentration (ppm) | 102 | 230 |
| Average ratio of $NO_x$ removal (%) | 78.7 | 52.1 |
| Average ammonia leakage | 4 | 150 |

The method for removal of $NO_x$ described in the Example removed nitrogen oxides more efficiently as compared with the method for removal of $NO_x$ described in the Control. The former method suffered very little leakage of unaltered ammonia, a possible cause for secondary air pollution and thus proved to be a highly satisfactory measure for the removal of $NO_x$ from the exhaust gas of a diesel automobile.

## Claims

1. A method for the removal of nitrogen oxides from the exhaust gas of a diesel engine (1) by catalytic reduction using a honeycomb catalyst (10) in the presence of ammonia, characterised by feeding the ammonia into the exhaust gas in an amount which is proportional to the product of the engine revolutions and torque of the diesel engine.

2. A method as claimed in Claim 1, characterised in that the amount of ammonia to be fed is in the range of 0.3 to 2 parts by volume per one part by volume of $NO_x$.

3. A method as claimed in Claim 1 or Claim 2 characterised in that the engine revolution level is detected by an engine revolution level sensor (3) and the torque is detected by a torque sensor (4), the two output signals from the sensors are combined in an arithmetic unit (5), and the outcome of the calculation is fed to an ammonia flow volume control unit (6) to effect control of the volumetric flow rate of the ammonia.

4. A method as claimed in any preceding claim characterised in that the reaction temperature of the catalyst bed (10) is in the range of 150° to 650°C and the space velocity of the exhaust gas through the catalyst bed is in the range of 2,000 to 100,000hr$^{-1}$.

5. A method as claimed in any preceding claim characterised in that the through holes in the catalyst possess an equivalent diameter in the range of 1.5 to 5mm and the geometric surface area of the catalyst is in the range of 600 to 2,000 m$^2$/m$^3$.

6. A method as claimed in any preceding claim characterised in that the cell wall thickness of the catalyst is in the range of 0.3 to 0.9mm.

7. A system for the removal of nitrogen oxides from the exhaust gas of diesel engine (1) by catalytic reduction using ammonia, which includes an ammonia flow control valve (6) connected to an ammonia source (11) and an ammonia feed pipe (12) connecting the ammonia flow control valve to a converter packed with a honeycomb catalyst and fitted with a nozzle (13) opening into the engine exhaust pipe (9) characterised by an arithmetic unit (5), an engine revolution sensor (3) adapted to detect the engine revolution level and connected to the arithmetic unit (5), a torque sensor (4) adapted to detect the torque generated by the diesel engine (1) and connected to the arithmetic unit (5), the flow control valve (6) being adapted to effect control of the flow of ammonia in response to a signal generated by the arithmetic unit (5).

8. A system as claimed in Claim 7 characterised in that the arithmetic unit (5) calculates the product of the engine revolution level and the torque of the engine, and controls the flow of ammonia proportionately to the outcome of the multiplication.

9. A system as claimed in Claim 6 or Claim 7 characterised in that the catalyst includes, as its active material 60 to 99.5% by weight of an oxide containing titanium and/or zirconium (Component A), and 0.5 to 40% by weight of an oxide of vandium, tungsten, molybdenum, maganese, cerium and/or tin (Component B).

7

EP 0 277 765 B1

10. A system as claimed in Claim 9 characterised in that Component A is titanium oxide, zirconium oxide, a binary complex oxide of titanium and silicon, a binary complex oxide of titanium and zirconium, or a ternary complex oxide of titanium, silicon and zirconium.

**Patentansprüche**

1. Verfahren zum Entfernen von Stickstoffoxiden aus dem Abgas eines Dieselmotors (1) durch katalytische Reduktion unter Einsatz eines Wabenkatalysators (10) in Anwesenheit von Ammoniak, dadurch gekennzeichnet, daß das Ammoniak in das Abgas in einer Menge eingefördert wird, die proportional ist zu dem Produkt aus Drehzahl und Drehmoment des Dieselmotors.

2. Verfahren nach Anspruch 1, dadurch gekennzeichnet, daß die zu fördernde Ammoniakmenge im Bereich von 0,3 bis 2 Volumen Anteilen pro Volumenanteil $NO_x$ liegt.

3. Verfahren nach Anspruch 1 oder 2, dadurch gekennzeichnet, daß die Drehzahl des Motors durch einen Drehzahlsensor (3) und das Drehmoment durch einen Drehmomentsensor (4) erfaßt wird, daß die beiden Ausgangssignale der Sensoren in einem Rechner (5) verknüpft werden und daß das Rechenergebnis einer Steuereinheit (6) für den Ammoniakvolumenstrom zugeführt wird, um die volumetrische Durchflußrate des Ammoniak zu steuern.

4. Verfahren nach einem der vorhergehenden Ansprüche, dadurch gekennzeichnet, daß die Reaktionstemperatur des Katalysatorbettes (10) im Bereich von 150°C bis 650°C liegt und daß die Raumgeschwindigkeit des Abgases durch das Katalysatorbett im Bereich von 2.000 1/h bis 100.000 1/h liegt.

5. Verfahren nach einem der vorhergehenden Ansprüche, dadurch gekennzeichnet, daß die Durchgangsöffnungen des Katalysators einen äquivalenten Durchmesser im Bereich von 1,5mm bis 5mm aufweisen und daß der geometrische Oberflächenbereich des Katalysators im Bereich von $600m^2/m^3$ bis $2000\ m^2/m^3$ liegt.

6. Verfahren nach einem der vorhergehenden Ansprüche, dadurch gekennzeichnet, daß die Zellenwanddicke des Katalysators im Bereich von 0,3mm bis 0,9mm liegt.

7. System zum Entfernen von Stickstoffoxiden aus dem Abgas eines Dieselmotors (1) durch katalytische Reduktion unter Einsatz von Ammoniak, mit einem Ammoniak-Durchflußsteuerventil (6), das an eine Ammoniakquelle angeschlossen ist, und mit einer Ammoniak-Förderleitung (12), die das Ammoniak-Durchflußsteuerventil an einen Konverter anschließt, der mit einem Wabenkatalysator gepackt und mit einer sich in die Motor-Abgasleitung (9) öffnenden Düse (13) versehen ist, gekennzeichnet durch einem Rechner (5); einen Motordrehzahlsensor (3), der so ausgebildet ist, daß er die Motordrehzahl erfaßt, und der an den Rechner (5) angeschlossen ist; einen Drehmomentsensor (4), der so ausgebildet ist, daß er das von dem Dieselmotor (1) erzeugte Drehmoment erfaßt, und der an den Rechner (5) angeschlossen ist; wobei das Durchflußsteuerventil (6) so ausgebildet ist, daß es eine Steuerung des Ammoniakdurchflusses in Abhängigkeit von einem von dem Rechner (5) erzeugten Signal bewirkt.

8. System nach Anspruch 7, dadurch gekennzeichnet, daß der Rechner (5) das Produkt aus der Motordrehzahl und dem Drehmoment des Motors berechnet und den Ammoniakdurchfluß proportional zu dem Ergebnis der Multiplikation steuert.

9. System nach Anspruch 7 oder 8, dadurch gekennzeichnet, daß der Katalysator als aktives Material 60 bis 99,5 Gew.-% eines Titan und/oder Zirkon enthaltenden Oxids (Komponente A) und 0,5 bis 40 Gew.-% eines Vandium-, Wolfram-, Molybdän-, Mangan-, Cer- und/oder Zinnoxids (Komponente B) umfaßt.

10. System nach Anspruch 9, dadurch gekennzeichnet, daß die Komponente A Titanoxid, Zirkonoxid, ein binär-komplexes Titan-Silizium-Oxid, ein binär-komplexes Titan-Zirkon-Oxid oder ein ternär-komplexes Titan-Silizium-Zirkon-Oxid ist.

**Revendications**

1. Procédé d'enlèvement des oxydes d'azote du gaz d'échappement d'un moteur diésel (1) par réduction catalytique en utilisant un catalyseur en nid d'abeilles (10) en présence d'ammoniac, caractérisé en ce qu'on charge l'ammoniac dans le gaz d'échappement en une quantité qui est proportionnelle au produit du nombre de rotations du moteur par le couple moteur du moteur diésel.

2. Procédé selon la revendication 1, caractérisé en ce que la quantité d'ammoniac à charger est dans un intervalle de 0,3 à 2 parties en volume pour une partie en volume de $NO_x$.

3. Procédé selon la revendication 1 ou la revendication 2, caractérisé en ce qu'on détecte le niveau de rotation du moteur par un capteur de niveau de rotation du moteur (3) et en ce qu'on détecte le couple moteur par un capteur de couple moteur (4), en ce qu'on combine les deux signaux de sortie provenant des capteurs dans une unité arithmétique (5), et en ce qu'on charge la sortie du calcul dans une unité de commande du volume de débit d'ammoniac (6) pour réaliser la commande du débit volumétrique de l'ammoniac.

4. Procédé selon l'une quelconque des revendications précédentes, caractérisé en ce que la température de réaction du lit de catalyseur (10) est dans un intervalle de 150 à 650°C et en ce que le débit du gaz d'échappement à travers le lit de catalyseur est dans un intervalle de 2 000 à 100 000 h$^{-1}$.

5. Procédé selon l'une quelconque des revendications précédentes, caractérisé en ce que les trous percés d'un bout à l'autre dans le catalyseur possèdent un diamètre équivalent situé dans un intervalle allant de 1,5 à 5 mm et en ce que la surface géométrique du catalyseur est dans un intervalle allant de 600 à 2 000 m$^2$/m$^3$.

6. Procédé selon l'une quelconque des revendications précédentes, caractérisé en ce que l'épaisseur de paroi cellulaire du catalyseur est dans un intervalle de 0,3 à 0,9 mm.

7. Système pour enlever les oxydes d'azote d'un gaz d'échappement d'un moteur diésel (1) par réduction catalytique en utilisant de l'ammoniac, qui inclut une soupape de commande du débit d'ammoniac (6) reliée à une source d'ammoniac (11) et une canalisation d'alimentation en ammoniac (12) reliant la soupape de commande de débit d'ammoniac à un convertisseur rempli d'un catalyseur en nid d'abeilles équipé d'une buse (13) ouvrant dans la' canalisation d'échappement du moteur (9), caractérisé par une unité arithmétique (5), un capteur de rotations du moteur (3), adapté pour détecter le niveau de rotation du moteur et relié à l'unité arithmétique (5), un capteur de couple moteur (4) adapté pour détecter le couple moteur généré par le moteur diésel (1) et relié à l'unité arithmétique (5), la soupape de commande du débit (6) étant adaptée pour effectuer la commande du débit d'ammoniac en réponse à un signal généré par l'unité arithmétique (5).

8. Système selon la revendication 7, caractérisé en ce que l'unité arithmétique (5) calcule le produit du niveau de rotation du moteur et du couple moteur du moteur et commande le débit d'ammoniac de manière proportionnelle à la sortie de la multiplication.

9. Système selon la revendication 6 ou la revendication 7, caractérisé en ce que le catalyseur comprend, comme matière active, de 60 à 99,5% en poids d'un oxyde comprenant du titane et/ou du zirconium (composant A), et de 0,5 à 40% en poids d'un oxyde de vanadium, de tungstène, de molybdène, de manganèse, de cérium et/ou d'étain (composant B).

10. Système selon la revendication 9, caractérisé en ce que le composant A est l'oxyde de titane, l'oxyde de zirconium, un oxyde complexe binaire de titane et de silicium, un oxyde complexe binaire de titane et de zirconium, ou un oxyde complexe ternaire de titane, de silicone et de zirconium.

# FIG. 1

AMOUNT OF NITROGEN OXIDES DISCHARGED (Nml/min)

5000

4000

3000

2000

1000

2    4    6    8  (X10⁴)

REVOLUTION NUMBER x TORQUE (rev.min⁻¹·kg·m)

# FIG. 2

# FIG. 3

```
              ┌─────────────┐
              │   START     │
              └──────┬──────┘
                     │
          ┌──────────▼──────────┐
          ╱      POWER           ╲
    NO   ╱       SOURCE           ╲      STEP  I
  ◄─────◄        ON?               ►
          ╲                      ╱
           ╲────────┬──────────╱
                    │ YES
         ┌──────────▼──────────┐
        ╱   INPUT ENGINE       ╱
       ╱    REVOLUTION        ╱        STEP  2
      ╱   NUMBER SENSOR      ╱
     └──────────┬──────────┘
                │
      ┌─────────▼──────────┐
     ╱   INPUT            ╱
    ╱    TORQUE          ╱           STEP  3
   ╱   GENERATED        ╱
  └──────────┬─────────┘
             │
   ┌─────────▼─────────┐
   │  CALCULATE        │
   │  PROPER AMMONIA   │            STEP  4
   │  FLOW  VOLUME     │
   └─────────┬─────────┘
             │
   ┌─────────▼─────────┐
   │ AMMONIA VOLUME    │
   │ CONTROLLER        │            STEP  5
   │ OPERATES          │
   └─────────┬─────────┘
             │
          ┌──▼──────────┐
         ╱   POWER       ╲
   NO   ╱    SOURCE       ╲         STEP  6
 ◄─────◄     OFF?          ►
         ╲                ╱
          ╲──────┬───────╱
                 │ YES
          ┌──────▼──────┐
          │    END      │
          └─────────────┘
```